(19) **Europäisches Patentamt / European Patent Office / Office européen des brevets**

(11) **EP 4 550 465 A1**

(12) **EUROPEAN PATENT APPLICATION**
published in accordance with Art. 153(4) EPC

(43) Date of publication:
07.05.2025 Bulletin 2025/19

(21) Application number: 23831155.9

(22) Date of filing: 16.06.2023

(51) International Patent Classification (IPC):
$H01M\ 4/525^{(2010.01)}$ $H01M\ 4/36^{(2006.01)}$
$H01M\ 4/505^{(2010.01)}$

(52) Cooperative Patent Classification (CPC):
H01M 4/36; H01M 4/505; H01M 4/525; Y02E 60/10

(86) International application number:
PCT/JP2023/022391

(87) International publication number:
WO 2024/004709 (04.01.2024 Gazette 2024/01)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 30.06.2022 JP 2022105943

(71) Applicant: Panasonic Intellectual Property Management Co., Ltd.
Kadoma-shi, Osaka 571-0057 (JP)

(72) Inventors:
• SAITO, Motoharu
Kadoma-shi, Osaka 571-0057 (JP)
• OGASAWARA, Takeshi
Kadoma-shi, Osaka 571-0057 (JP)
• HIBINO, Mitsuhiro
Kadoma-shi, Osaka 571-0057 (JP)

(74) Representative: Novagraaf International SA
Chemin de l'Echo 3
1213 Onex, Geneva (CH)

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(57) Provided is a positive electrode active material for a non-aqueous electrolyte secondary battery that can improve the capacity and durability of the non-aqueous electrolyte secondary battery. The positive electrode active material contained in a non-aqueous electrolyte secondary battery comprises a lithium transition metal composite oxide containing at least 70 mol% of Ni and Mn with respect to the total molar amount of metal elements other than Li, the lithium transition metal composite oxide is composed of single particles, the average particle size of the single particles is 0.65 $\mu$m-4 $\mu$m, and the crystallite size of the single particles is 380 Å-750 Å.

EP 4 550 465 A1

# Figure 1

**Description**

TECHNICAL FIELD

The present disclosure relates to a positive electrode active material for a non-aqueous electrolyte secondary battery, and a non-aqueous electrolyte secondary battery.

BACKGROUND ART

For a positive electrode active material of a lithium-ion secondary battery being a non-aqueous electrolyte secondary battery, a lithium-transition metal composite oxide is used. In recent years, formation of single particles of the lithium-transition metal composite oxide has been investigated for a purpose of improving durability. For example, Patent Literature 1 discloses single particles of a boron-added NCM-based lithium-transition metal composite oxide (Ni content rate of $0.3 \leq Ni \leq 0.6$) having an average particle diameter of greater than or equal to 2 $\mu$m and less than or equal to 20 $\mu$m and a BET specific surface area of greater than or equal to 0.15 $m^2$/g and less than or equal to 1.9 $m^2$/g. Patent Literature 2 discloses single particles of an NCM-based lithium-transition metal composite oxide (Ni content rate of $0.3 \leq Ni \leq 0.6$) having an average particle diameter of greater than or equal to 3 $\mu$m and less than or equal to 8 $\mu$m and a crystallite size of greater than or equal to 1100 Å and less than or equal to 2000 Å.

CITATION LIST

PATENT LITERATURE

PATENT LITERATURE 1: Japanese Translation of PCT International Application Publication No. 2018-532236
PATENT LITERATURE 2: Japanese Patent No. 6850949

SUMMARY

The present inventors have made intensive investigation, and consequently found that the durability may be poor even with the single particles of the lithium-transition metal composite oxide. The present inventors have made further investigation, and found that the single particles does not achieve both battery capacity and the durability simultaneously in some cases. Patent Literature 1 and 2 does not consider the achievement of both the high capacity and the high durability, and still has room for improvement.

It is an advantage of the present disclosure to provide a positive electrode active material for a non-aqueous electrolyte secondary battery that can improve capacity and durability of the non-aqueous electrolyte secondary battery.

A positive electrode active material for a non-aqueous electrolyte secondary battery of an aspect of the present disclosure includes a lithium-transition metal composite oxide containing greater than or equal to 70 mol% of Ni and Mn relative to a total molar amount of metal elements excluding Li, wherein the lithium-transition metal composite oxide is constituted of single particles, an average particle diameter of the single particles is greater than or equal to 0.65 $\mu$m and less than or equal to 4 $\mu$m, and a crystallite size of the single particles is greater than or equal to 380 Å and less than or equal to 750 Å.

A non-aqueous electrolyte secondary battery of an aspect of the present disclosure comprises: a positive electrode including the above positive electrode active material; a negative electrode; and a non-aqueous electrolyte.

According to the positive electrode active material for a non-aqueous electrolyte secondary battery of an aspect of the present disclosure, the non-aqueous electrolyte secondary battery having a high capacity and improved durability can be provided.

BRIEF DESCRIPTION OF DRAWINGS

FIG. 1 is an axial sectional view of a non-aqueous electrolyte secondary battery of an example of an embodiment.
FIG. 2 is a schematical sectional view of a test cell produced in Examples and Comparative Examples.
FIG. 3 is SEM images of a positive electrode active material according to Example C1 before and after crushing.
FIG. 4 is SEM images of a positive electrode active material according to Example C2 before and after crushing.
FIG. 5 is SEM images of a positive electrode active material according to Example C3 before and after crushing.

FIG. 6 is SEM images of a positive electrode active material according to Comparative Example C4 before and after crushing.

FIG. 7 is SEM images of a positive electrode active material according to Comparative Example C5 before and after crushing.

DESCRIPTION OF EMBODIMENTS

With the spread of non-aqueous electrolyte secondary batteries for on-vehicle use and power storage use in recent years, a non-aqueous electrolyte secondary battery having a high capacity and excellent durability has been increasingly required. In addition, cost reduction of the non-aqueous electrolyte secondary battery has also been desired, and a positive electrode active material preferably contains Ni and Mn, which are relatively inexpensive, as main components. For a purpose of improving the durability, formation of single particles of the lithium-transition metal composite oxide as a positive electrode active material has been investigated. However, there still have been many unclear points on characteristics of the single particles.

The present inventors have made intensive investigation to solve the above problem, and consequently found that both the high capacity and the high durability can be achieved with single particles of a lithium-transition metal composite oxide containing Ni and Mn as a main component and having predetermined average particle diameter and crystallite size.

Hereinafter, an example of the embodiment of a non-aqueous electrolyte secondary battery according to the present disclosure will be described in detail. Hereinafter, a cylindrical battery housing a wound electrode assembly in a cylindrical exterior will be exemplified, but the electrode assembly is not limited to the wound electrode assembly, and may be a stacked electrode assembly in which a plurality of positive electrodes and a plurality of negative electrodes are alternately stacked one by one with a separator interposed therebetween. The shape of the exterior is not limited to the cylindrical shape, and may be, for example, a rectangular shape, a coin shape, or the like. The exterior may be a pouch composed of laminated sheets including a metal layer and a resin layer. The description " a numerical value (A) to a numerical value (B)" herein means greater than or equal to the value (A) and less than or equal to the value (B).

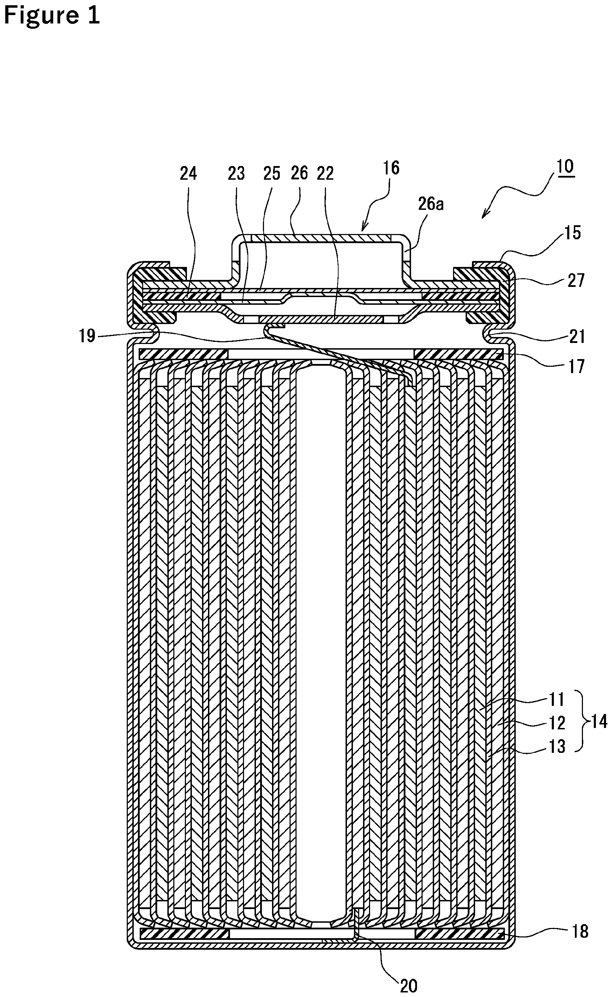

FIG. 1 is an axial sectional view of a cylindrical secondary battery 10 of an example of the embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound with a separator 13 interposed therebetween. Hereinafter, for convenience of description, a sealing assembly 16 side will be described as the "upper side", and the bottom side of the exterior 15 will be described as the "lower side".

An upper end of the exterior 15 is capped with the sealing assembly 16 to seal an inside of the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through a through hole of the insulating plate 18 toward the bottom side of the exterior 15, and is welded to a bottom inner face of the exterior 15. In the secondary battery 10, the exterior 15 becomes a negative electrode terminal. When the negative electrode lead 20 is provided on an outer end of winding, the negative electrode lead 20 extends through an outside of the insulating plate 18 toward the bottom side of the exterior 15, and welded with a bottom inner face of the exterior 15.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside to support the sealing assembly 16. The grooved portion 21 is preferably formed in a circular shape along a circumferential direction of the exterior 15, and supports the sealing assembly 16 with the gasket 27 interposed therebetween and with the upper face of the grooved portion 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of middle portions thereof, and the insulating member 24 is interposed between circumferences thereof. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening 26a of the cap 26.

Hereinafter, the positive electrode 11, the negative electrode 12, the separator 13, and the non-aqueous electrolyte, which constitute the electrode assembly 14, particularly the positive electrode 11, will be described in detail.

[Positive Electrode]

The positive electrode 11 has a positive electrode current collector and a positive electrode mixture layer formed on a surface of the positive electrode current collector. The positive electrode mixture layer is preferably formed on both surfaces of the positive electrode current collector. For the positive electrode current collector, a foil of a metal stable within a potential range of the positive electrode 11, such as aluminum and an aluminum alloy, a film in which such a metal is disposed on a surface layer, or the like may be used. The positive electrode mixture layer includes, for example, a positive electrode active material, a conductive agent, a binder, and the like. A thickness of the positive electrode mixture layer is, for example, greater than or equal to 10 $\mu$m and less than or equal to 150 $\mu$m on one side of the positive electrode current collector. The positive electrode 11 is produced by, for example, applying a positive electrode mixture slurry including the positive electrode active material, the conductive agent, and the binder on the surface of the positive electrode current collector, and drying and then rolling the coating film to form the positive electrode mixture layer on both the surfaces of the positive electrode current collector.

Examples of the conductive agent included in the positive electrode mixture layer may include carbon-based particles such as carbon black (CB), acetylene black (AB), Ketjenblack, carbon nanotube (CNT), graphene, and graphite. These may be used singly, or in combination of two or more. A content rate of the conductive agent is, for example, greater than or equal to 0.1 mass% and less than or equal to 5.0 mass% relative to 100 parts by mass of the positive electrode active material.

Examples of the binder included in the positive electrode mixture layer may include fluororesins such as polytetrafluoroethylene (PTFE) and polyvinylidene fluoride (PVdF), polyacrylonitrile (PAN), polyimides, acrylic resins, and polyolefins. With these resins, cellulose derivatives such as carboxymethylcellulose (CMC) or a salt thereof, polyethylene oxide (PEO), and the like may be used in combination. A content rate of the binder is, for example, greater than or equal to 0.1 mass% and less than or equal to 5.0 mass% relative to 100 parts by mass of the positive electrode active material.

The positive electrode active material included in the positive electrode mixture layer includes a lithium-transition metal composite oxide. The lithium-transition metal composite oxide is constituted of single particles. The positive electrode active material may include, in addition to the single particles, secondary particles each formed by aggregation of the single particles. This increases charge density of the positive electrode active material in a positive electrode mixture layer, and thereby can increase capacity of the secondary battery 10. The secondary particles each formed by aggregation of the single particles are formed by aggregation of, for example, greater than or equal to 2 and less than or equal to 1000 of the single particles. Common primary particles that are not the single particles and secondary particles each formed by aggregation of these primary particles may be included. The positive electrode active material may contain LiF, Li$_2$S, and the like in addition to the lithium-transition metal composite oxide.

A proportion of the single particles in the positive electrode active material is preferably greater than or equal to 10%, more preferably greater than or equal to 80%, and particularly preferably greater than or equal to 90%, or may be substantially 100% at a mass proportion. The lithium-transition metal composite oxide may include secondary particles each formed by aggregation of more than 100 of the primary particles.

An average particle diameter of the single particles is greater than or equal to 0.65 $\mu$m and less than or equal to 4 $\mu$m. The average particle diameter herein means a median diameter (D50) on a volumetric basis. The D50 means a particle diameter at which a cumulative frequency is 50% from a smaller particle diameter side in a particle size distribution on a volumetric basis. The particle size distributions of the positive electrode active material may be measured by using a laser diffraction-type particle size distribution measuring device (for example, MT3000II, manufactured by MicrotracBEL Corp.) with water as a dispersion medium. An excessively large particle diameter of the single particles may decrease the battery capacity or deteriorate charge-discharge efficiency. An excessively small particle diameter of the single particles causes secondary aggregation, which becomes a factor of battery deterioration.

A BET specific surface area of the single particles is, for example, greater than or equal to 0.5 m$^2$/g and less than or equal to 4 m$^2$/g. Since the secondary particles have pores in the particles, the specific surface area is relatively large even with a large particle diameter. Meanwhile, since the single particles have no pores in the particles, the larger the particle diameter, the smaller the BET specific surface area. The secondary particles and the single particles have variously varied particle shapes depending on production conditions, and thereby the BET specific surface area varies. The BET specific surface area can be measured by using TriStar II 3020 (manufactured by SHIMADZU CORPORATION) under the following condition.

Measurement Points: 11 points (P/P0: greater than or equal to 0.05 and less than or equal to 0.3)
Warm Free Space: Measured
Equilibration Interval: 5 s

Analysis Adsorptive: N2
Analysis Bath Temp.: 77.3 K (temperature of liquefied nitrogen)
Cold Free Space: Measured
Low Pressure Done: None
Analysis Method: BET multi-point method

When the BET specific surface area of the lithium-transition metal composite oxide is defined as A ($m^2$/g) and the average particle diameter of the lithium-transition metal composite oxide is defined as B ($\mu$m), a product of A and B, AB, preferably satisfies $1.5 \leq AB \leq 1.6$. This remarkably improves the battery capacity and the durability of the secondary battery 10. Secondary particles each formed by aggregation of single particles with a small particle diameter may undergo cracking of the particle boundary, resulting in deterioration of charge-discharge cycle characteristics. Single particles with a large particle diameter may decrease the battery capacity. If the single particles have a small BET specific surface area, the area in contact with the non-aqueous electrolyte may be small, resulting in decreased battery capacity or deterioration of load characteristics. If the single particles have a large BET specific surface area, many side reactions such as gas generation may occur on the positive electrode, resulting in deterioration of charge-discharge cycle characteristics. Therefore, the product of the average particle diameter (D50) and the BET specific surface area within the above range can yield the secondary battery 10 with high capacity, high durability, and inhibited gas generation.

A crystallite size of the single particles is greater than or equal to 380 Å and less than or equal to 750 Å. The single particles having the above average particle diameter and crystallite size can yield the secondary battery 10 with high capacity and improved durability. Here, the crystallite size is calculated with Scherrer equation represented below from a half-value width of a diffraction peak of a (104) plane in an X-ray diffraction pattern by X-ray diffraction. In the following equation, "s" represents the crystallite size, $\lambda$ represents a wavelength of the X-ray, B represents the half-value width of the diffraction peak of the (104) plane, $\theta$ represents a diffraction angle (rad), and K represents the Scherrer constant. In the present embodiment, K is 0.9.

$$s = K\lambda/B\cos\theta$$

The X-ray diffraction pattern is obtained by a powder X-ray diffraction method using a powder X-ray diffraction apparatus (manufactured by Rigaku Corporation, product name "RINT-TTR", radiation source Cu-K$\alpha$) under the following conditions.

Measuring range: 15-120°
Scanning rate: 4°/min
Analyzing range: 30-120°
Background: B-spline
Profile function: Split pseudo-Voigt function
Restricting condition: Li(3a) + Ni(3a) = 1

$$Ni(3a) + Ni(3b) = \alpha \ (\alpha \text{ represents each Ni content proportion})$$

ICSD No.: 98-009-4814

The lithium-transition metal composite oxide contains greater than or equal to 70 mol% of Ni and Mn relative to a total molar amount of metal elements excluding Li. This can yield a relatively inexpensive lithium-transition metal composite oxide having a high capacity. The lithium-transition metal composite oxide may be constituted of only Ni and Mn.

Ni is preferably contained at the largest amount among the metal elements constituting the lithium-transition metal composite oxide excluding Li. A content rate of Ni in the lithium-transition metal composite oxide is preferably greater than or equal to 50 mol%, and more preferably greater than or equal to 70 mol% relative to the total molar amount of the metal elements excluding Li. An upper limit value of the Ni content rate may be 95 mol%, but preferably 90 mol%.

Mn is preferably contained at the second largest amount next to Ni among the metal elements constituting the lithium-transition metal composite oxide excluding Li. Mn can stabilize a crystal structure of the lithium-transition metal composite oxide. A content rate of Mn in the lithium-transition metal composite oxide is, for example, greater than or equal to 5 mol% and less than or equal to 50 mol% relative to the total molar amount of the metal elements excluding Li.

Use of the single particles can retain high capacity retention even at high charge potential. Specifically, a lithium-transition metal composite oxide with less than or equal to 80% of a content rate of Ni and a high content rate of Mn in the composition can yield high capacity by raising the charge potential, and thereby single particles having high-potential resistance are needed.

On surfaces of the single particles, a surface-modifying layer including a boron compound may be formed. This improves the charge-discharge efficiency. It is presumed that the boron compound inhibits decomposition of the electrolyte liquid, and enhances exchange of Li ions between the non-aqueous electrolyte and the positive electrode active material on the surface of the lithium-transition metal composite oxide. The boron compound refers to a compound including B (boron). The boron compound is, for example, a boron oxide, a boron fluoride, a boron chloride, and a boron sulfide. The boron compound is preferably the boron oxide. The boron oxide is, for example, boric acid ($H_3BO_3$), boron oxide ($B_2O_3$), and lithium borate ($LiBO_2$, $LiB_3O_5$, or $Li_2B_4O_7$). The boron compound present on the surface of the lithium-transition metal composite oxide can be confirmed with a low-acceleration SEM, TEM-EDX, or the like.

A thickness of the surface-modifying layer is, for example, greater than or equal to 1 nm and less than or equal to 100 nm. An amount of the boron compound in the surface-modifying layer is, for example, greater than or equal to 0.1 mol% and less than or equal to 0.7 mol% relative to a total molar amount of metal elements excluding Li in the single particles. An atomic concentration of each element can be measured by X-ray photoelectron spectrometry (XPS).

The lithium-transition metal composite oxide may further include at least one metal element selected from the group consisting of Ca, Sr, W, and S. These metal elements may be contained in the lithium-transition metal composite oxide, but preferably present on the surface of the lithium-transition metal composite oxide. This configuration can inhibit side reactions between the lithium-transition metal composite oxide and the electrolyte liquid to inhibit deterioration of the battery. These metal elements may be contained in the surface-modifying layer together with B. The positive electrode active material may include these metal elements at, for example, greater than or equal to 0.01 mol% and less than or equal to 5 mol% relative to a total amount of Ni and Mn.

Next, an example of a method for manufacturing the positive electrode active material according to the present embodiment will be described. The method for manufacturing the positive electrode active material includes, for example, a synthesizing step, a washing step, a drying step, and a crushing step.

In the synthesizing step, a metal hydroxide containing greater than or equal to 70 mol% of Ni and Mn and a Li compound are mixed and calcined to obtain the lithium-transition metal composite oxide.

The metal hydroxide may be obtained by, for example, with stirring a solution of metal salts including Ni, Mn, and optional metal elements (such as Fe), adding dropwise a solution of an alkali such as sodium hydroxide in order to adjust a pH on the alkaline side (for example, greater than or equal to 8.5 and less than or equal to 12.5) to precipitate (coprecipitate). Instead of the metal hydroxide, a metal oxide obtained by thermally treating the metal hydroxide may be used. Since a smaller particle diameter of the metal hydroxide easily grows the primary particles, the particle diameter of the metal hydroxide is preferably less than or equal to 7 $\mu$m.

Examples of the Li compound include $Li_2CO_3$, LiOH, $Li_2O_2$, $Li_2O$, $LiNO_3$, $LiNO_2$, $Li_2SO_4$, $LiOH \cdot H_2O$, LiH, and LiF. A mixing ratio between the metal hydroxide and the Li compound is preferably set so that the mole ratio of the metal elements excluding Li : Li is within a range of, for example, greater than or equal to 1:0.98 and less than or equal to 1:1.1 in terms of easily regulating the above parameters within the specified regions. When the metal hydroxide and the Li compound are mixed, a Ca compound, a Sr compound, a W compound, and the like may be added. Examples of the Ca compound include CaO, $Ca(OH)_2$, and $CaCO_3$. Examples of the Sr compound include SrO, $Sr(OH)_2$, and $SrCO_3$. Examples of the W compound include $WO_3$, $Li_2WO_4$, $Li_4WO_5$, and $Li_6W_2O_9$.

The mixture of the metal hydroxide, the Li compound, and the like are calcined under an oxygen atmosphere (flowing gas with an oxygen concentration of greater than or equal to 80%), for example. The calcining conditions may be conditions such that a heating rate within greater than or equal to 450°C and less than or equal to 680°C is within a range of greater than 1.0 °C/min and less than or equal to 5.5 °C/min, and a highest reaching temperature is within a range of greater than or equal to 850°C and less than or equal to 1100°C. A heating rate from greater than 680°C to the highest reaching temperature may be, for example, greater than or equal to 0.1 °C/min and less than or equal to 3.5 °C/min. A holding time at the highest reaching temperature may be greater than or equal to 1 hour and less than or equal to 30 hours. This calcining step may be a multistep calcination, and a plurality of the first heating rates and the second heating rates may be set in each temperature range as long as the first heating rates and the second heating rates are within the above determined ranges. Regulating the calcining conditions may regulate the particle diameter of the single particles. For example, raising the highest reaching temperature may increase the particle diameter of the single particles.

In the washing step, the lithium-transition metal composite oxide obtained in the synthesizing step is washed with water, and dehydrated to obtain a cake-like composition. The washing with water and the dehydration may be performed by a known method under a known condition, and performed within a range so as not to deteriorate the battery characteristics due to elution of lithium from the lithium-transition metal composite oxide. Into the cake-like composition, a Ca compound, a Sr compound, a W compound, a S compound, a P compound, and the like may be added.

In the drying step, the cake-like composition obtained in the washing step is dried to obtain a powder composition. The drying step may be performed under a vacuum atmosphere. The drying conditions are, for example, greater than or equal to 150°C and less than or equal to 400°C for greater than or equal to 0.5 hours and less than or equal to 15 hours.

The powder composition obtained in the drying step can be crushed to obtain the single particles. For crushing, a jet mill or the like may be used. The crushing with the jet mill may be performed by using, for example, PJM-80 (manufactured by Nippon Pneumatic Mfg. Co., Ltd.) under the following condition.

Amount of compressed air consumption: 0.5 Nm$^3$/min
Pressure of supplied gas: 0.53 MPa
Treating amount: 2000 g/hour

A compound including boron, such as boric acid ($H_3BO_3$), may be added to the obtained single particles and heated to greater than or equal to 200°C and less than or equal to 400°C to form the surface-modifying layer containing the boron compound on the surfaces of the single particles. The amount of the compound including boron added is, for example, greater than or equal to 0.1 mol% and less than or equal to 7 mol% relative to the total molar amount of the metal elements excluding Li in the lithium-transition metal composite oxide.

[Negative Electrode]

The negative electrode 12 has a negative electrode current collector and a negative electrode mixture layer formed on a surface of the negative electrode current collector. The negative electrode mixture layer is preferably formed on both surfaces of the negative electrode current collector. For the negative electrode current collector, a foil of a metal stable within a potential range of the negative electrode 12, such as copper, a film in which such a metal is disposed on a surface layer, or the like may be used. The negative electrode mixture layer includes, for example, a negative electrode active material, a binder, and the like. The negative electrode 12 may be produced by, for example, applying a negative electrode mixture slurry including the negative electrode active material and the binder on the surface of the negative electrode current collector, and drying and then rolling the coating film to form the negative electrode mixture layer on both the surfaces of the negative electrode current collector.

The negative electrode 12 may include boron. A part of boron present on the surface of the positive electrode active material may transfer from the positive electrode 11 to the negative electrode 12. Even if the metal elements such as Ni precipitate on the negative electrode surface, containing B in combination can inhibit deterioration of the battery. The amount of boron included in the negative electrode is preferably greater than or equal to 50 μg, and more preferably greater than or equal to 400 μg and less than or equal to 1200 μg per gram of the positive electrode active material. For example, among the boron added to the positive electrode, greater than or equal to 35% of boron precipitates on the negative electrode, and less than or equal to 55% of boron remains in the positive electrode.

Examples of the negative electrode active material contained in the negative electrode mixture layer include a carbon-based active material that reversibly occludes and releases lithium ions. A preferable carbon-based active material is graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material constituted of at least one of the group consisting of Si and a Si-containing compound may be used, and the carbon-based active material and the Si-based active material may be used in combination.

As the binder contained in the negative electrode mixture layer, fluororesins, PAN, polyimides, acrylic resins, polyolefins, or the like may be used as in the case of the positive electrode 11, but styrene-butadiene rubber (SBR) is preferably used. The negative electrode mixture layer preferably further includes CMC or a salt thereof, polyacrylic acid (PAA) or a salt thereof, polyvinyl alcohol (PVA), or the like. Among these, SBR; and CMC or a salt thereof, or PAA or a salt thereof are preferably used in combination. The negative electrode mixture layer may include a conductive agent.

[Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene or polypropylene, cellulose, or the like is preferable. The separator 13 may have a single-layered structure or a stacked structure. On a surface of the separator 13, a resin layer having high heat resistance, such as an aramid resin, and a filler layer including a filler of an inorganic compound may be provided.

[Non-Aqueous Electrolyte]

The non-aqueous electrolyte includes a non-aqueous solvent and an electrolyte salt dissolved in the non-aqueous solvent. For the non-aqueous solvent, any of esters, ethers, nitriles such as acetonitrile, and amides such as dimethylformamide, a mixed solvent of two or more thereof, or the like may be used, for example. The non-aqueous solvents may contain a halogen-substituted derivative in which the hydrogen atoms of these solvents are at least partially replaced with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as $\gamma$-butyrolactone (GBL) and $\gamma$-valerolactone (GVL); and chain carboxylates such as methyl acetate, ethyl acetate, propyl acetate, methyl propionate (MP), and ethyl propionate.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (1 < x < 6, and n represents 1 or 2), $LiB_{10}Cl_{10}$, LiCl, LiBr, LiI, lithium chloroborane, a lithium lower aliphatic carboxylate, borate salts such as $Li_2B_4O_7$ and $Li(B(C_2O_4)F_2)$, and imide salts such as $LiN(SO_2CF_3)_2$ and $LiN(C_1F_{2l+1}SO_2)(C_mF_{2m+1}SO_2)$ {l and m represent integers of 0 or more}. These lithium salts may be used singly, or as a mixture thereof. Among them, $LiPF_6$ is preferably used from the viewpoints of ion conductivity, electrochemical stability, and the like. A concentration of the lithium salt is preferably, for example, greater than or equal to 0.8 mol and less than or equal to 1.8 mol per litter of the non-aqueous solvent.

EXAMPLES

Hereinafter, the present disclosure will be further described with Examples, but the present disclosure is not limited to these Examples.

[Production of Positive Electrode Active Material]

<Positive Electrode Active Material A1>

LiOH and $Ni_{0.5}Mn_{0.5}(OH)_2$ powder obtained by a coprecipitation method and having an average particle diameter of 6 $\mu$m were mixed so that a mole ratio between Li and a total amount of Ni and Mn was 1.1:1 to obtain a mixture. Under an oxygen flow (flow rate of greater than or equal to 0.15 L/min and less than or equal to 0.2 L/min relative to 1 L of a capacity of a furnace) with an oxygen concentration of greater than or equal to 90%, this mixture was calcined from room temperature to 650°C for 5 h, then calcined to 1000°C for 2 h, and then retained for 9 hours to obtain a lithium-transition metal composite oxide. Excess lithium in this lithium-transition metal composite oxide was removed with water washing, and dried to obtain secondary particles each formed by aggregation of primary particles. Further, these secondary particles were crushed with a jet mill to obtain a positive electrode active material A1.

<Positive Electrode Active Materials A2 to 5>

Positive electrode active materials A2 to 5 were obtained in the same manner as the positive electrode active material A1 except that the highest reaching temperature was changed as described in Tables 1 and 3.

<Positive Electrode Active Materials B1 to 4>

Positive electrode active materials B1 to 4 were obtained in the same manner as the positive electrode active material A1 except that the composition of the hydroxide to be mixed was changed to $Ni_{0.6}Mn_{0.4}(OH)_2$ and the highest reaching temperature was changed as described in Tables 1 and 3.

<Positive Electrode Active Materials C1 to 5>

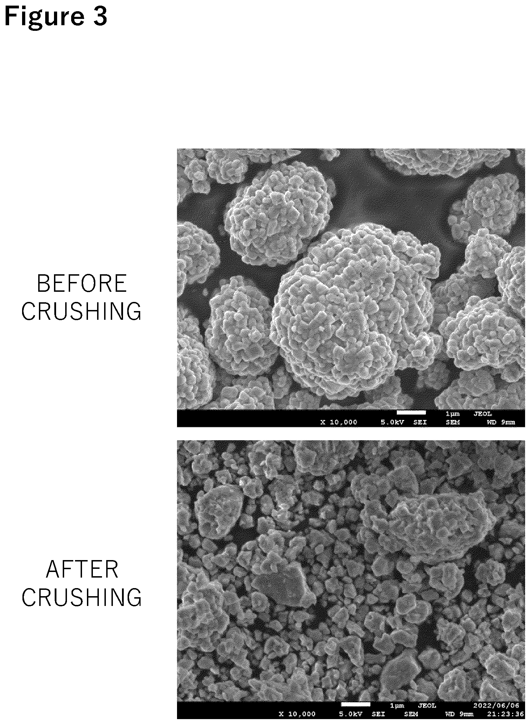

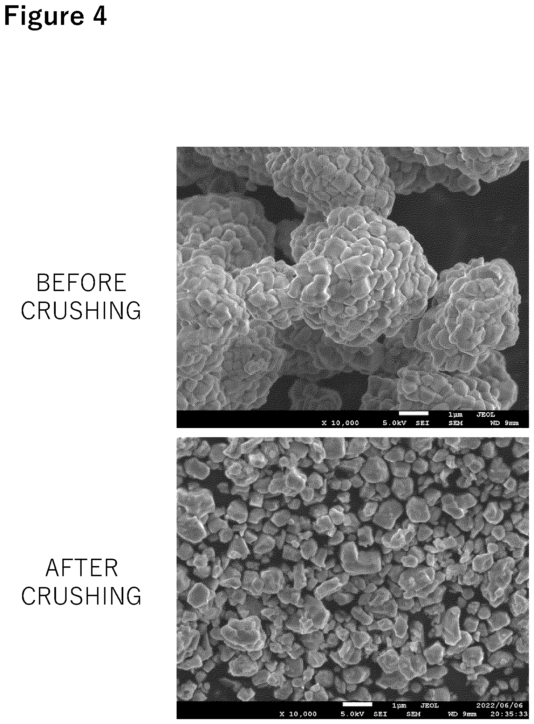

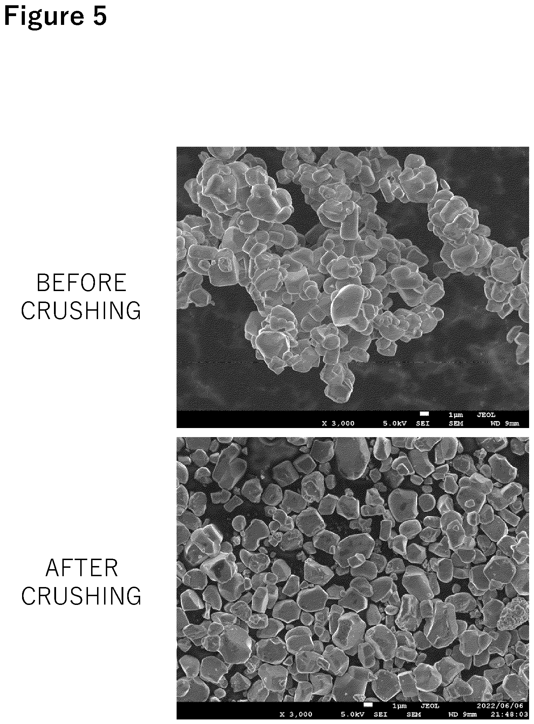

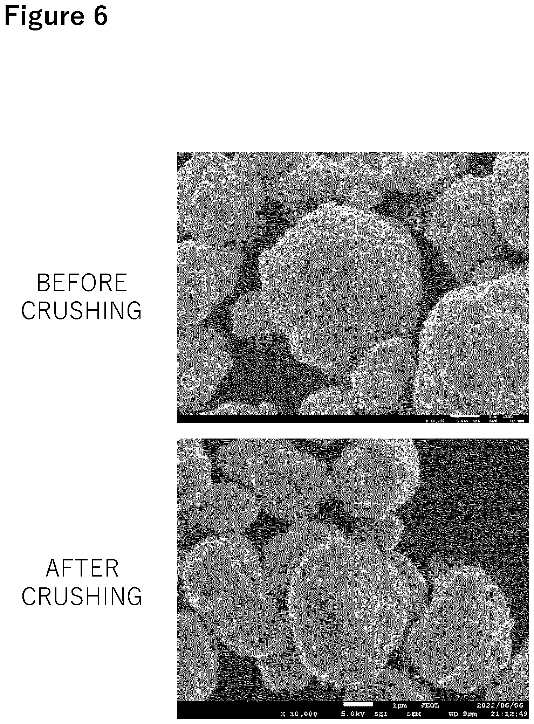

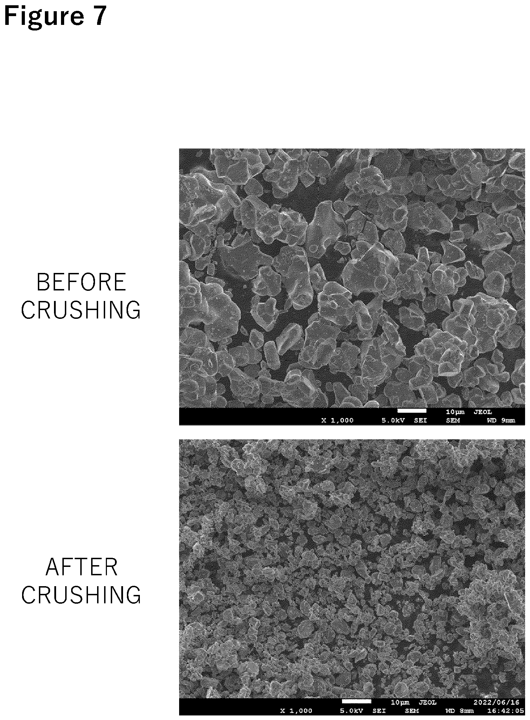

Positive electrode active materials C1 to 5 were obtained in the same manner as the positive electrode active material A1 except that, in the production of the positive electrode active material, the composition of the hydroxide to be mixed was changed to $Ni_{0.7}Mn_{0.3}(OH)_2$ and the highest reaching temperature was changed as described in Tables 1 and 3. FIGS. 3 to 7 show SEM images of the positive electrode active materials according to the positive electrode active materials C1 to 5 before and after the crushing. Before the crushing in all FIGS. 3, 4, and 6, a shape of secondary particles each formed by aggregation of primary particles were constituted. After the crushing in FIGS. 3 and 4, the shape of the single particles can be observed, but in contrast, after the crushing in FIG. 6, the shape of the single particles cannot be observed. As above, even when the secondary particles have substantially same shape in the SEM image, some are the single particles and others are not the single particles. As in FIG. 3, even when a part of the aggregate remains while crushed to the single particles, the effect as the single particles is exhibited with an average particle diameter of the single particles of greater than or equal to 0.65 $\mu$m and less than or equal to 4 $\mu$m and a crystallite size of the single particles of greater than or equal to 380 Å and less than or equal to 750 Å. However, particles with hardly crushed as in FIG. 6 are not single particles, and do not exhibit the effect as the single particles. Meanwhile, as in FIGS. 5 and 7, some particles have the form of the single particles even before the crushing. However, if the average particle diameter or the crystallite size of the particles are out of the above ranges, as the example shown in FIG. 7, the characteristics of the battery are not sufficiently improved.

<Positive Electrode Active Materials D1 to 3>

Positive electrode active materials D1 to 3 were obtained in the same manner as the positive electrode active material A1 except that, in the production of the positive electrode active material, the composition of the hydroxide to be mixed was changed to $Ni_{0.75}Mn_{0.25}(OH)_2$ and the highest reaching temperature was changed as described in Tables 1 and 3.

<Positive Electrode Active Material E1>

Boric acid ($H_3BO_3$) was added to the positive electrode active material A1, subjected to thermal treatment, and a surface-modifying layer containing the boron compound was formed on the surface of the positive electrode active material A1 to obtain a positive electrode active material E1. An amount of boric acid added was set to 2 mol% relative to a total molar amount of metal elements excluding Li in the single particles.

<Positive Electrode Active Materials E2 to 4>

Positive electrode active materials E2 to 4 were obtained in the same manner as the positive electrode active material E1 except that the highest reaching temperature was changed as described in Tables 2 and 4.

<Positive Electrode Active Materials F1 to 4>

Positive electrode active materials F1 to 4 were obtained in the same manner as the positive electrode active material E1 except that the composition of the hydroxide to be mixed was changed to $Ni_{0.6}Mn_{0.4}(OH)_2$ and the highest reaching temperature was changed as described in Tables 2 and 4.

<Positive Electrode Active Materials G1 to 4>

Positive electrode active materials G1 to 4 were obtained in the same manner as the positive electrode active material E1 except that, in the production of the positive electrode active material, the composition of the hydroxide to be mixed was changed to $Ni_{0.7}Mn_{0.3}(OH)_2$ and the highest reaching temperature was changed as described in Tables 2 and 4.

<Positive Electrode Active Materials H1 and 2>

Positive electrode active materials H1 and 2 were obtained in the same manner as the positive electrode active material E1 except that, in the production of the positive electrode active material, the composition of the hydroxide to be mixed was changed to $Ni_{0.75}Mn_{0.25}(OH)_2$ and the highest reaching temperature was changed as described in Tables 2 and 4.

[Production of Test Cell]

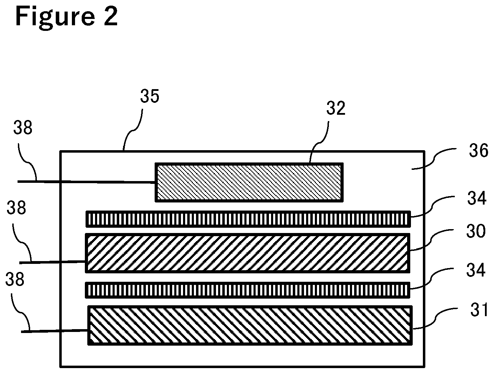

A test cell illustrated in FIG. 2 was produced by the following procedure. First, the above positive electrode active material, acetylene black (conductive agent), and polyvinylidene fluoride (binder) were mixed at 80:10:10 at a weight ratio, and N-methyl-2-pyrrolidone was used for form a slurry. Then, this slurry was applied on an aluminum foil current collector, which was a positive electrode current collector, and dried in vacuo at 110°C to produce a working electrode 30 (positive electrode).

Under dry air with a dewpoint of less than or equal to -50°C, an electrode group in which a separator 34 was interposed between electrodes of the working electrode 30 to which an electrode tab 38 was attached, a counter electrode 31 (negative electrode), and a reference electrode 32 was housed in an exterior 35, then an electrolyte liquid 36 was injected into the exterior 35, and then the exterior 35 was sealed to produce a test cell being a non-aqueous electrolyte secondary battery. This yielded test cells A1 to H4 respectively corresponding to the positive electrode active materials A1 to H4. Details of each constituent were as follows.

Counter electrode: Lithium metal
Reference electrode: Lithium metal
Separator: Separator made of polyethylene
Non-aqueous electrolyte: A solution in which $LiPF_6$ was dissolved as an electrolyte salt at a concentration of 1.0 mol/l into a non-aqueous solvent obtained by mixing ethylene carbonate (EC) and ethyl methyl carbonate (EMC) at a volume ratio of 3:7

[Evaluation 1 of Charge Capacity, Discharge Capacity, and Charge-Discharge Efficiency]

Under an environment temperature at 25°C, the above test cell was charged at a constant current of 0.2 C until 4.5 V (reference to lithium), and then charged at a constant voltage of 4.5 V until 0.02 C. Thereafter, the test cell was discharged at a constant current of 0.1 C until 2.5 V. A charge capacity and a discharge capacity at this time were measured, and this discharge capacity was divided by this charge capacity to calculate charge-discharge efficiency.

[Evaluation 1 of Durability]

Under an environment temperature at 25°C, the above test cell was charged at a constant current of 0.2 C until 4.5 V, and then charged at a constant voltage of 4.5 V until 0.02 C. Thereafter, the test cell was discharged at a constant current of 0.1 C until 2.5 V. This charge and discharge was specified as one cycle, the measurement was performed under the above conditions at the 11th cycle, the 21st cycle, and the 31st cycle, and the charge and discharge were performed in the same manner as above at the other cycles except that the constant current during the discharge was changed to 0.2 C. A capacity retention was determined by the following formula.

Capacity retention = (Discharge capacity at 31st cycle / Discharge capacity at 1st cycle) $\times$ 100

Tables 1 and 2 show evaluation results of Examples and Comparative Examples. Table 1 shows the results on the test cells A1 to D2, and Table 2 shows the results on the test cells E1 to H2. The results of the test cells including the single particles having an average particle diameter of greater than or equal to 0.65 μm and less than or equal to 4 μm and a crystallite size of greater than or equal to 380 Å and less than or equal to 750 Å were Examples, and the results on the test cells other the above were Comparative Examples. For example, the result of the test cell F1 is shown as Example F1-1.

[Table 1]

| | Composition of lithium-transition metal composite oxide [mol%] | | Highest reaching temperature [°C] | D50 [μm] | BET specific surface area [m²/g] | D50 × BET specific surface area | Crystallite size [Å] | Charge voltage: 4.5 V | | | |
|---|---|---|---|---|---|---|---|---|---|---|---|
| | Ni | Mn | | | | | | Charge capacity [mAh/g] | Discharge capacity [mAh/g] | Charge-discharge efficiency [%] | Capacity retention [%] |
| Example A1-1 | 50 | 50 | 1000 | 0.778 | 3.011 | 2.34 | 388 | 209 | 186 | 89 | 90 |
| Example A2-1 | 50 | 50 | 1050 | 1.07 | 2.501 | 2.68 | 530 | 207 | 181 | 87 | 88 |
| Example A3-1 | 50 | 50 | 1100 | 3.664 | 0.844 | 3.09 | 662 | 209 | 181 | 86 | 85 |
| Comparative Example A4-1 | 50 | 50 | 800 | 1.292 | 5.346 | 6.91 | 196 | 190 | 166 | 88 | 80 |
| Comparative Example A5-1 | 50 | 50 | 850 | 1.574 | 4.428 | 6.97 | 232 | 194 | 176 | 91 | 81 |
| Example B1-1 | 60 | 40 | 950 | 3.233 | 1.707 | 5.52 | 420 | 220 | 194 | 88 | 94 |
| Example B2-1 | 60 | 40 | 1000 | 1.428 | 1.709 | 2.44 | 573 | 220 | 191 | 87 | 90 |
| Example B3-1 | 60 | 40 | 1050 | 2.691 | 1.792 | 4.82 | 747 | 211 | 164 | 78 | 86 |
| Comparative Example B4-1 | 60 | 40 | 1100 | 3.731 | 1.670 | 6.23 | 753 | 196 | 131 | 67 | 64 |
| Example C1-1 | 70 | 30 | 850 | 1.722 | 2.420 | 4.17 | 413 | 221 | 198 | 90 | 98 |
| Example C2-1 | 70 | 30 | 900 | 0.695 | 3.818 | 2.65 | 509 | 229 | 199 | 87 | 95 |
| Example C3-1 | 70 | 30 | 950 | 2.295 | 0.869 | 1.99 | 730 | 223 | 186 | 83 | 93 |
| Comparative Example C4-1 | 70 | 30 | 800 | 2.561 | 1.616 | 4.14 | 370 | 217 | 197 | 91 | 92 |
| Comparative Example C5-1 | 70 | 30 | 1000 | 3.31 | 1.995 | 6.60 | 766 | 216 | 165 | 77 | 82 |
| Example D1-1 | 75 | 25 | 850 | 0.712 | 3.165 | 2.25 | 466 | 224 | 195 | 87 | 96 |
| Example D2-1 | 75 | 25 | 900 | 2.011 | 1.063 | 2.14 | 659 | 221 | 192 | 87 | 87 |

[Table 2]

| | Composition of lithium-transition metal composite oxide [mol%] | | Highest reaching temperature [°C] | D50 [μm] | BET specific surface area [m²/g] | D50 × BET specific surface area | Crystallite size [Å] | Charge voltage: 4.5 V | | | |
|---|---|---|---|---|---|---|---|---|---|---|---|
| | Ni | Mn | | | | | | Charge capacity [mAh/g] | Discharge capacity [mAh/g] | Charge-discharge efficiency [%] | Capacity retention [%] |
| Example E1-1 | 50 | 50 | 1000 | 0.778 | 3.011 | 2.34 | 388 | 207 | 184 | 89 | 99 |
| Example E2-1 | 50 | 50 | 1050 | 1.07 | 2.501 | 2.68 | 530 | 204 | 178 | 87 | 97 |
| Example F1-1 | 60 | 40 | 950 | 3.233 | 1.707 | 5.52 | 420 | 218 | 196 | 90 | 98 |
| Example F2-1 | 60 | 40 | 1000 | 1.428 | 1.709 | 2.44 | 573 | 218 | 190 | 87 | 93 |
| Comparative Example F3-1 | 60 | 40 | 1100 | 3.731 | 1.670 | 6.23 | 753 | 146 | 60 | 41 | 41 |
| Example G1-1 | 70 | 30 | 850 | 1.722 | 2.420 | 4.17 | 413 | 229 | 206 | 90 | 97 |
| Example G2-1 | 70 | 30 | 900 | 0.695 | 3.818 | 2.65 | 509 | 227 | 205 | 90 | 96 |
| Comparative Example G3-1 | 70 | 30 | 800 | 2.561 | 1.616 | 4.14 | 370 | 224 | 205 | 92 | 95 |
| Comparative Example G4-1 | 70 | 30 | 1000 | 3.31 | 1.995 | 6.60 | 766 | 192 | 123 | 64 | 53 |
| Example H1-1 | 75 | 25 | 850 | 0.712 | 3.165 | 2.25 | 466 | 233 | 208 | 89 | 94 |
| Example H2-1 | 75 | 25 | 900 | 2.011 | 1.063 | 2.14 | 659 | 229 | 199 | 87 | 89 |

[Evaluation 2 of Charge Capacity, Discharge Capacity, and Charge-Discharge Efficiency]

Under an environment temperature at 25°C, the above test cell was charged at a constant current of 0.2 C until 4.7 V (reference to lithium), and then charged at a constant voltage of 4.7 V until 0.02 C. Thereafter, the test cell was discharged at a constant current of 0.1 C until 2.5 V. A charge capacity and a discharge capacity at this time were measured, and this discharge capacity was divided by this charge capacity to calculate charge-discharge efficiency.

[Evaluation 2 of Durability]

Under an environment temperature at 25°C, the above test cell was charged at a constant current of 0.2 C until 4.7 V, and then charged at a constant voltage of 4.7 V until 0.02 C. Thereafter, the test cell was discharged at a constant current of 0.1 C until 2.5 V. This charge and discharge was specified as one cycle, the measurement was performed under the above conditions at the 11th cycle, the 21st cycle, and the 31st cycle, and the charge and discharge were performed in the same manner as above at the other cycles except that the constant current during the discharge was changed to 0.2 C. A capacity retention was determined by the following formula.

Capacity retention = (Discharge capacity at 31st cycle / Discharge capacity at 1st cycle) $\times$ 100

Tables 3 and 4 show evaluation results of Examples and Comparative Examples. Table 3 shows the results on the test cells A1 to D3, and Table 4 shows the results on the test cells E1 to H2. The results of the test cells including the single particles having an average particle diameter of greater than or equal to 0.65 $\mu$m and less than or equal to 4 $\mu$m and a crystallite size of greater than or equal to 380 Å and less than or equal to 750 Å were Examples, and the results on the test cells other the above were Comparative Examples. For example, the result of the test cell E1 is shown as Example E1-2.

[Table 3]

| | Composition of lithium-transition metal composite oxide [mol%] | | Highest reaching temperature [°C] | D50 [μm] | BET specific surface area [m$^2$/g] | D50 × BET specific surface area | Crystallite size [Å] | Charge voltage: 4.7 V | | | |
|---|---|---|---|---|---|---|---|---|---|---|---|
| | Ni | Mn | | | | | | Charge capacity [mAh/g] | Discharge capacity [mAh/g] | Charge-discharge efficiency [%] | Capacity retention [%] |
| Example A1-2 | 50 | 50 | 1000 | 0.778 | 3.011 | 2.34 | 388 | 222 | 191 | 86 | 78 |
| Example A2-2 | 50 | 50 | 1050 | 1.07 | 2.501 | 2.68 | 530 | 221 | 187 | 85 | 77 |
| Example A3-2 | 50 | 50 | 1100 | 3.664 | 0.844 | 3.09 | 662 | 209 | 181 | 86 | 85 |
| Comparative Example A4-2 | 50 | 50 | 800 | 1.292 | 5.346 | 6.91 | 196 | 211 | 176 | 84 | 74 |
| Example B1-2 | 60 | 40 | 950 | 3.233 | 1.707 | 5.52 | 420 | 232 | 199 | 86 | 78 |
| Example B2-2 | 60 | 40 | 1000 | 1.428 | 1.709 | 2.44 | 573 | 227 | 193 | 85 | 77 |
| Example B3-2 | 60 | 40 | 1050 | 2.691 | 1.792 | 4.82 | 747 | 214 | 164 | 77 | 60 |
| Comparative Example B4-2 | 60 | 40 | 1100 | 3.731 | 1.670 | 6.23 | 753 | 204 | 133 | 65 | 35 |
| Example C1-2 | 70 | 30 | 850 | 1.722 | 2.420 | 4.17 | 413 | 238 | 203 | 85 | 76 |
| Example C2-2 | 70 | 30 | 900 | 0.695 | 3.818 | 2.65 | 509 | 236 | 203 | 86 | 81 |
| Comparative Example C5-2 | 70 | 30 | 1000 | 3.31 | 1.995 | 6.60 | 766 | 217 | 165 | 76 | 70 |
| Example D1-2 | 75 | 25 | 850 | 0.712 | 3.165 | 2.25 | 466 | 241 | 206 | 85 | 76 |
| Example D2-2 | 75 | 25 | 900 | 2.011 | 1.063 | 2.14 | 659 | 234 | 196 | 84 | 81 |
| Comparative Example D3-2 | 75 | 25 | 800 | 4.016 | 2.192 | 8.80 | 398 | 237 | 203 | 86 | 70 |

[Table 4]

| | Composition of lithium-transition metal composite oxide [mol%] | | Highest reaching temperature [°C] | D50 [μm] | BET specific surface area [m²/g] | D50 × BET specific surface area | Crystallite size [Å] | Charge voltage: 4.7 V | | | |
|---|---|---|---|---|---|---|---|---|---|---|---|
| | Ni | Mn | | | | | | Charge capacity [mAh/g] | Discharge capacity [mAh/g] | Charge-discharge efficiency [%] | Capacity retention [%] |
| Example E1-2 | 50 | 50 | 1000 | 0.778 | 3.011 | 2.34 | 388 | 232 | 198 | 85 | 95 |
| Example E2-2 | 50 | 50 | 1050 | 1.07 | 2.501 | 2.68 | 530 | 227 | 195 | 86 | 96 |
| Example E3-2 | 50 | 50 | 1100 | 3.664 | 0.844 | 3.09 | 662 | 226 | 188 | 83 | 94 |
| Example E4-2 | 50 | 50 | 800 | 1.292 | 5.346 | 6.91 | 196 | 220 | 188 | 86 | 91 |
| Example F1-2 | 60 | 40 | 950 | 3.233 | 1.707 | 5.52 | 420 | 238 | 206 | 87 | 94 |
| Example F2-3 | 60 | 40 | 1000 | 1.428 | 1.709 | 2.44 | 573 | 230 | 197 | 86 | 92 |
| Comparative Example F3-2 | 60 | 40 | 1100 | 3.731 | 1.670 | 6.23 | 753 | 169 | 83 | 49 | 53 |
| Comparative Example F4-2 | 60 | 40 | 800 | 3.504 | 2.989 | 10.47 | 269 | 230 | 199 | 87 | 90 |
| Example G1-2 | 70 | 30 | 850 | 1.722 | 2.420 | 4.17 | 413 | 234 | 209 | 89 | 96 |
| Example G2-2 | 70 | 30 | 900 | 0.695 | 3.818 | 2.65 | 509 | 237 | 212 | 90 | 92 |
| Comparative Example G3-2 | 70 | 30 | 800 | 2.561 | 1.616 | 4.14 | 370 | 232 | 207 | 89 | 91 |
| Comparative Example G4-2 | 70 | 30 | 1000 | 3.31 | 1.995 | 6.60 | 766 | 200 | 135 | 67 | 60 |
| Example H1-2 | 75 | 25 | 850 | 0.712 | 3.165 | 2.25 | 466 | 242 | 216 | 89 | 82 |
| Example H2-2 | 75 | 25 | 900 | 2.011 | 1.063 | 2.14 | 659 | 240 | 204 | 85 | 88 |

EP 4 550 465 A1

In Tables 1 and 2, the test cells of Examples achieve both the charge capacity and the capacity retention. Meanwhile, in Tables 1 and 2, the test cells of Comparative Examples are poor at one of the charge capacity and the capacity retention compared with Examples. Accordingly, it is understood that both the high capacity and the high durability can be achieved with the single particles having the predetermined average particle diameter and the crystallite size. As shown in Tables 3 and 4, although the single particles themselves can improve the battery characteristics, the boron compound protecting the positive electrode surface further yields effects such as improvement of the battery capacity, the charge-discharge efficiency, and the capacity retention, and inhibition of gas generation.

The present disclosure will be further described with the following embodiments.

Constitution 1:

A positive electrode active material for a non-aqueous electrolyte secondary battery, including a lithium-transition metal composite oxide containing greater than or equal to 70 mol% of Ni and Mn relative to a total molar amount of metal elements excluding Li, wherein

the lithium-transition metal composite oxide is constituted of single particles,

an average particle diameter of the single particles is greater than or equal to 0.65 $\mu$m and less than or equal to 4 $\mu$m, and

a crystallite size of the single particles is greater than or equal to 380 Å and less than or equal to 750 Å.

Constitution 2:

The positive electrode active material for a non-aqueous electrolyte secondary battery according to Constitution 1, wherein, when a BET specific surface area of the lithium-transition metal composite oxide is defined as A ($m^2$/g) and an average particle diameter of the lithium-transition metal composite oxide is defined as B ($\mu$m),

**a product** of A and B, AB, satisfies $1.5 \leq AB \leq 6$.

Constitution 3:

The positive electrode active material for a non-aqueous electrolyte secondary battery according to Constitution 1 or 2, wherein a surface-modifying layer including a boron compound is formed on surfaces of the single particles.

Constitution 4:

The positive electrode active material for a non-aqueous electrolyte secondary battery according to any one of Constitutions 1 to 3, wherein the lithium-transition metal composite oxide further includes at least one metal element selected from the group consisting of Ca, Sr, W, S, and P.

Constitution 5:

The positive electrode active material for a non-aqueous electrolyte secondary battery according to any one of Constitutions 1 to 4, wherein the positive electrode active material includes, in addition to the single particles, secondary particles each formed by aggregation of the single particles.

Constitution 6:

The positive electrode active material for a non-aqueous electrolyte secondary battery according to any one of Constitutions 1 to 5, wherein the single particles are included at greater than or equal to 10 mass% relative to a total amount of the positive electrode active material for a non-aqueous electrolyte secondary battery.

Constitution 7:

A non-aqueous electrolyte secondary battery, comprising:

a positive electrode including the positive electrode active material for a non-aqueous electrolyte secondary battery according to any one of Constitutions 1 to 6;

a negative electrode; and

a non-aqueous electrolyte.

REFERENCE SIGNS LIST

10 Secondary battery, 11 Positive electrode, 12 Negative electrode, 13 Separator, 14 Electrode assembly, 15 Exterior, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 26a Opening, 27 Gasket, 30 Working electrode (positive electrode), 31 Counter electrode (negative electrode), 32 Reference electrode, 34 Separator, 35 Exterior, 36 Electrolyte liquid, 38 Electrode tab

**EP 4 550 465 A1**

**Claims**

1. A positive electrode active material for a non-aqueous electrolyte secondary battery, including a lithium-transition metal composite oxide containing greater than or equal to 70 mol% of Ni and Mn relative to a total molar amount of metal elements excluding Li, wherein

   the lithium-transition metal composite oxide is constituted of single particles,
   an average particle diameter of the single particles is greater than or equal to 0.65 $\mu$m and less than or equal to 4 $\mu$m, and
   a crystallite size of the single particles is greater than or equal to 380 Å and less than or equal to 750 Å.

2. The positive electrode active material for a non-aqueous electrolyte secondary battery according to claim 1, wherein, when a BET specific surface area of the lithium-transition metal composite oxide is defined as A ($m^2$/g) and an average particle diameter of the lithium-transition metal composite oxide is defined as B ($\mu$m), a product of A and B, AB, satisfies $1.5 \leq AB \leq 6$.

3. The positive electrode active material for a non-aqueous electrolyte secondary battery according to claim 1, wherein a surface-modifying layer including a boron compound is formed on surfaces of the single particles.

4. The positive electrode active material for a non-aqueous electrolyte secondary battery according to claim 1, wherein the lithium-transition metal composite oxide further includes at least one metal element selected from the group consisting of Ca, Sr, W, S, and P.

5. The positive electrode active material for a non-aqueous electrolyte secondary battery according to claim 1, wherein the positive electrode active material includes, in addition to the single particles, secondary particles each formed by aggregation of the single particles.

6. The positive electrode active material for a non-aqueous electrolyte secondary battery according to claim 1, wherein the single particles are included at greater than or equal to 10 mass% relative to a total amount of the positive electrode active material for a non-aqueous electrolyte secondary battery.

7. A non-aqueous electrolyte secondary battery, comprising:

   a positive electrode including the positive electrode active material for a non-aqueous electrolyte secondary battery according to any one of claims 1 to 6;
   a negative electrode; and
   a non-aqueous electrolyte.

# Figure 1

# Figure 2

# Figure 3

BEFORE
CRUSHING

AFTER
CRUSHING

# Figure 4

BEFORE
CRUSHING

AFTER
CRUSHING

# Figure 5

BEFORE
CRUSHING

AFTER
CRUSHING

# Figure 6

BEFORE
CRUSHING

AFTER
CRUSHING

# Figure 7

BEFORE
CRUSHING

AFTER
CRUSHING

## INTERNATIONAL SEARCH REPORT

| | International application No. |
|---|---|
| | **PCT/JP2023/022391** |

| **A.** | **CLASSIFICATION OF SUBJECT MATTER** |
|---|---|

*H01M 4/525*(2010.01)i; *H01M 4/36*(2006.01)i; *H01M 4/505*(2010.01)i
FI: H01M4/525; H01M4/505; H01M4/36 C

According to International Patent Classification (IPC) or to both national classification and IPC

| **B.** | **FIELDS SEARCHED** |
|---|---|

Minimum documentation searched (classification system followed by classification symbols)

H01M4/525; H01M4/36; H01M4/505

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | JP 2017-188443 A (NICHIA KAGAKU KOGYO KK) 12 October 2017 (2017-10-12) | 1-7 |
| A | JP 2018-532236 A (LG CHEM, LTD.) 01 November 2018 (2018-11-01) | 1-7 |
| A | WO 2016/060105 A1 (SUMITOMO CHEMICAL COMPANY, LIMITED, TANAKA CHEMICAL CORPORATION) 21 April 2016 (2016-04-21) | 1-7 |
| A | JP 2004-335278 A (NICHIA KAGAKU KOGYO KK) 25 November 2004 (2004-11-25) | 1-7 |
| A | JP 2021-516424 A (LG CHEM, LTD.) 01 July 2021 (2021-07-01) | 1-7 |
| A | JP 2022-507671 A (LG CHEM, LTD.) 18 January 2022 (2022-01-18) | 1-7 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 August 2023** | **05 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

PCT/JP2023/022391

| Patent document cited in search report | | | Publication date (day/month/year) | Patent family member(s) | | | Publication date (day/month/year) |
|---|---|---|---|---|---|---|---|
| JP | 2017-188443 | A | 12 October 2017 | JP | 2018-147889 | A | |
| | | | | JP | 2022-9262 | A | |
| | | | | US | 2019/0027749 | A1 | |
| | | | | US | 2019/0260023 | A1 | |
| | | | | US | 2020/0287212 | A1 | |
| | | | | US | 2022/0102716 | A1 | |
| | | | | US | 2017/0288221 | A1 | |
| JP | 2018-532236 | A | 01 November 2018 | US | 2018/0261842 | A1 | |
| | | | | US | 2021/0313573 | A1 | |
| | | | | WO | 2017/095153 | A1 | |
| | | | | EP | 3386015 | A1 | |
| | | | | KR | 10-2017-0063408 | A | |
| | | | | CN | 108140829 | A | |
| WO | 2016/060105 | A1 | 21 April 2016 | US | 2017/0237069 | A1 | |
| | | | | EP | 3208872 | A1 | |
| | | | | KR | 10-2017-0057450 | A | |
| | | | | CN | 107078293 | A | |
| | | | | KR | 10-2019-0026061 | A | |
| JP | 2004-335278 | A | 25 November 2004 | (Family: none) | | | |
| JP | 2021-516424 | A | 01 July 2021 | US | 2021/0135187 | A1 | |
| | | | | WO | 2019/221497 | A1 | |
| | | | | EP | 3751646 | A1 | |
| | | | | KR | 10-2019-0131842 | A | |
| | | | | CN | 111819718 | A | |
| | | | | KR | 10-2022-0132491 | A | |
| JP | 2022-507671 | A | 18 January 2022 | JP | 2023-1232 | A | |
| | | | | US | 2021/0408537 | A1 | |
| | | | | WO | 2020/106024 | A1 | |

Form PCT/ISA/210 (patent family annex) (January 2015)

## INTERNATIONAL SEARCH REPORT
### Information on patent family members

| International application No. |
| --- |
| **PCT/JP2023/022391** |

| Patent document cited in search report | Publication date (day/month/year) | Patent family member(s) | | Publication date (day/month/year) |
| --- | --- | --- | --- | --- |
| | | EP | 3869594 A1 | |
| | | KR | 10-2020-0059164 A | |
| | | CN | 113169329 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018532236 W

- JP 6850949 B